# EUROPÄISCHE PATENTSCHRIFT

(11) **EP 2 084 370 B1**
(45) Veröffentlichungstag und Bekanntmachung des Hinweises auf die Patenterteilung: **27.01.2010**
(21) Anmeldenummer: 07819440.4
(22) Anmeldetag: 30.10.2007
(51) Int. Cl.: F01D 17/14, F01D 17/16, F02B 37/24

(54) **ABGASTURBOLADER FÜR EINE BRENNKRAFTMASCHINE**
EXHAUST GAS TURBOCHARGER FOR AN INTERNAL COMBUSTION ENGINE
TURBOCOMPRESSEUR DE GAZ D'ÉCHAPPEMENT UTILISÉ POUR UN MOTEUR À COMBUSTION INTERNE

(30) Priorität: 02.11.2006 DE 102006051628
(43) Veröffentlichungstag der Anmeldung: 05.08.2009
(73) Patentinhaber: Daimler AG, 70327 Stuttgart (DE)
(72) Erfinder: FLEDERSBACHER, Peter, 70569 Stuttgart (DE); HIRTH, Torsten, 71277 Rutesheim (DE)
(74) Vertreter: JENSEN & SON
(86) Internationale Anmeldenummer: PCT/EP2007/009399
(87) Internationale Veröffentlichungsnummer: WO 2008/052738

(56) Entgegenhaltungen:
- WO-A-2004/007914
- WO-A-2006/061588
- DE-A1- 19 816 645
- GB-A- 2 408 779

## Beschreibung

Die Erfindung betrifft einen Abgasturbolader für eine Brennkraftmaschine gemäß dem Oberbegriff des Anspruchs 1.

Aus der Patentschrift DE 198 16 645 B4 ist ein Abgasturbolader mit einem Gehäuse und einem Laufzeug bekannt, wobei das Gehäuse einen Abgasführungsabschnitt aufweist, in welchem ein Turbinenrad des Laufzeugs drehbar aufgenommen ist. Das Turbinenrad ist mit einer Welle des Laufzeugs drehfest verbunden, welche eine Drehachse aufweist. Im Betrieb wird das Turbinenrad von Abgasen einer Brennkraftmaschine beaufschlagt und in eine Rotationsbewegung versetzt. Mit Hilfe einer Leitvorrichtung zur Änderung der Beaufschlagung des Turbinenrades durch das Abgas, welche im Abgasführungsgehäuse positioniert ist, ist eine Anströmung des Turbinenrades so einzustellen, dass ein möglichst hoher Wirkungsgrad des Abgasturboladers erreichbar ist. Dabei ist die Leitvorrichtung verstellbar ausgebildet, wobei eine Positionierung in Abhängigkeit eines bestimmten Betriebspunktes der Brennkraftmaschine erfolgt. Die Leitvorrichtung umfasst einen Axialschieber, welcher in Richtung der Drehachse axial verschiebbar ausgestaltet ist. Der Leitvorrichtung ist eine Verstellvorrichtung zur Verschiebung des Axialschiebers zugeordnet. Die Verstellvorrichtung weist eine Verstellgabel mit Endabschnitten auf, wobei die Endabschnitte nockenförmig ausgebildet sind. Die Endabschnitte sind in am Umfang des Axialschiebers vorgesehenen Aussparungen aufgenommen, wodurch ein Eingriff der Verstellgabel in die Aussparungen realisiert ist. Die Verstellgabel ist mit Hilfe eines Pneumatikzylinders schwenkbar ausgestaltet. Wird die Verstellgabel zur axialen Verschiebung des Axialschiebers vom Pneumatikzylinder bewegt, wird eine rotatorische Bewegung der Verstellgabel initiiert, wobei die Endabschnitte in den Aussparungen eine rotatorische Bewegung durchführen. Dabei ist ein Verkanten der Enden in den Aussparungen und damit ein Ausfall des Abgasturboladers nicht auszuschließen.

Der Erfindung liegt die Aufgabe zugrunde, einen Abgasturbolader derart auszugestalten, dass unter Berücksichtigung eines einfachen und kostengünstigen Aufbaus einer Verstellvorrichtung eine Verstellung des Axialschiebers in jedem Betriebsbereich gewährleistet ist.

Erfindungsgemäß wird diese Aufgabe mit den Merkmalen des Anspruchs 1 gelöst. Der erfindungsgemäße Abgasturbolader weist eine Verstellgabel auf, welche entlang eines Führungselementes translatorisch bewegbar ausgestaltet ist, wobei das Führungselement sich in Richtung der Drehachse erstreckend ausgebildet ist. Mit Hilfe des Führungselementes ist eine axiale Bewegung der Verstellgabel in Richtung der Drehachse definiert und eine Kippbewegung der Verstellgabel um die Drehachse ausgeschlossen. Wird die Verstellgabel axial in Richtung der Drehachse verschoben, führen Endabschnitte der Verstellgabel eine translatorische Bewegung aus. Mit Hilfe der Endabschnitte ist die translatorische Bewegung der Verstellgabel auf den Axialschieber übertragbar. Da zur Verschiebung des Axialschiebers die auf den Axialschieber übertragene Bewegung bereits eine translatorische Bewegung beschreibt, ist eine Kippbewegung des Axialschiebers um die Drehachse ausgeschlossen. Des Weiteren stellt die Verstellgabel eine kostengünstige Konstruktion in Leichtbauweise dar. Das Führungselement ist zur gesicherten Führung in einer Öffnung der Verstellgabel positioniert, wobei die Öffnung in einem Führungsabschnitt der Verstellgabel angeordnet ist.

In einer bevorzugten Ausgestaltung ist zwischen der Verstellgabel und dem Führungselement ein Kontakt mit einer Länge ausgebildet, wobei das Führungselement einen effektiven Durchmesser aufweist. Zur Reduzierung des Verschleißes und zur Gewährleistung eines dauerhaften Betriebes des Abgasturboladers ist ein zwischen der Länge und dem Durchmesser gebildetes Verhältnis größer als 2 vorteilhaft.

In einer weiteren Ausgestaltung ist das Führungselement an seiner vom Turbinenrad abgewandten Seite in einer Konturhülse und an seiner dem Turbinenrad zugewandten Seite im Abgasführungsabschnitt abgestützt, wodurch bei hohen Temperaturschwankungen im Betrieb ein Verzug des Führungselementes vermeidbar ist.

In einer weiteren, bevorzugten Ausgestaltung sind zur kostengünstigen Herstellung sowie zur einfachen Montage das Führungselement und die Öffnung zylinderförmig ausgestaltet.

In einer weiteren vorteilhaften Ausgestaltung weisen die Verstellgabel und der Axialschieber einen ersten Körperkontakt und einen zweiten Körperkontakt auf, wobei der erste Körperkontakt und der zweite Körperkontakt symmetrisch zu einer Führungsachse des Führungselementes angeordnet sind, wodurch eine Kippbewegung des Axialschiebers vermeidbar ist.

In einer weiteren Ausgestaltung weist der Führungsabschnitt eine zweite Aussparung auf, in welche ein erstes Hebelende eines Verstellhebels eingreifend angeordnet ist, mit Hilfe dessen die axiale Verschiebung einleitbar ist. Mit Hilfe der zweiten Aussparung ist eine die axiale Verschiebung initiierende Bewegung in eine translatorische Bewegung wandelbar, wodurch die Kippneigung des Axialschiebers zusätzlich begrenzbar ist. Die zweite Aussparung ist bevorzugt quer zur Drehachse ausgebildet.

In einer weiteren Ausgestaltung ist das erste Hebelende in Form einer Gleitrolle ausgebildet, wodurch ein Klemmen bei einer Übertragung der Verstellkraft vom Verstellhebel auf den Führungsabschnitt reduzierbar ist.

Weitere Vorteile und zweckmäßige Ausführungen der Erfindung sind der Beschreibung und den Zeichnungen zu entnehmen.

Dabei zeigen:
- Fig. 1: In einem Längsschnitt einen Abgasführungsabschnitt eines erfindungsgemäßen Abgasturboladers und
- Fig. 2: in einer perspektivischen Ansicht eine Leitvorrichtung und eine Verstellvorrichtung in Zusammenbauweise.

In den Figuren sind alle gleichen oder gleich wirkenden Bauteile mit denselben Bezugszeichen versehen.

Eine Brennkraftmaschine weist ein Maschinengehäuse mit einem Zylinderkopf und einem Kurbelgehäuse auf. Der Zylinderkopf ist mit einem Frischluftstrang der Brennkraftmaschine und mit einem Abgastrakt der Brennkraftmaschine verbunden.

Im Kurbelgehäuse sind Zylinder angeordnet, wobei jeder Zylinder einen axial bewegbaren Kolben aufweist. Des Weiteren ist im Kurbelgehäuse eine Kurbelwelle drehbar gelagert. Jeder Kolben ist mit Hilfe eines Pleuels mit der Kurbelwelle verbunden, so dass relevante Kolbenkräfte auf die Kurbelwelle übertragbar sind und in eine Drehbewegung der Kurbelwelle umgesetzt werden können.

In den Zylindern der Brennkraftmaschine sind Brennräume zur Verbrennung eines Kraftstoff-Luftgemisches ausgebildet. Jeder Brennraum ist von einer Innenwandung eines Zylinders, von dem im Zylinder bewegbaren Kolben sowie von einer Wandung des Zylinderkopfes begrenzt, wobei die Wandung des Zylinderkopfes und der jeweilige Kolben in etwa gegenüberliegend angeordnet sind. Die Brennräume sind mit Hilfe der entsprechenden Kolben in ihren Volumina veränderbar gestaltet, so dass darin ein an sich bekannter Verbrennungsprozeß durchgeführt werden kann.

Der Zylinderkopf umfasst ein Einlasssystem mit Einlasskanälen und Einlassventilen, ein Auslasssystem mit Auslasskanälen und Auslassventilen sowie ein Einspritzsystem zum Einspritzen von Kraftstoff in den zugehörigen Brennraum, wobei der Kraftstoff mit Hilfe einer Kraftstoffpumpe aus einem Kraftstofftank förderbar ist. Jeder Einlasskanal weist in bevorzugter Weise wenigstens ein Einlassventil auf, mit Hilfe dessen der Einlasskanal zu öffnen beziehungsweise zu schließen ist, wobei das Einlassventil an einem dem Brennraum zugewandten Ende des Einlasskanals angeordnet ist. Über den Einlasskanal ist dem Brennraum bei geöffnetem Einlassventil Verbrennungsluft oder ein Kraftstoff-Luftgemisch zuführbar. Ein vom Brennraum abgewandtes Ende des Einlasskanals ist mit einem Sammelbehälter verbunden, welcher im Frischluftstrang angeordnet ist und einer Strömungsberuhigung dient.

Jeder Auslasskanal weist bevorzugt wenigstens ein Auslassventil auf, mit Hilfe dessen der Auslasskanal zu öffnen beziehungsweise zu schließen ist, wobei das Auslassventil an einem Ende des Auslasskanals angeordnet ist, welches dem Brennraum zugewandt ist. Bei einer Verbrennung von im Brennraum gebildetem Kraftstoff-Luftgemisch entsteht im Betrieb der Brennkraftmaschine Abgas, welches über den Auslasskanal aus dem Brennraum in den Abgastrakt strömen kann.

Der Frischluftstrang weist eine Ladeluftleitung auf, wobei an einem Ende der Ladeluftleitung, welches der Brennkraftmaschine zugewandt ist, der Sammelbehälter angeordnet ist. Stromauf des Sammelbehälters ist in der Ladeluftleitung ein Ladeluftkühler zur Kühlung der angesaugten Verbrennungsluft positioniert. Ein Luftfilter zum Reinigen der angesaugten Verbrennungsluft ist an dem anderen Ende der Ladeluftleitung angeordnet, welches von der Brennkraftmaschine abgewandt positioniert ist.

Der Abgastrakt umfasst einen Abgaskrümmer sowie eine Abgasleitung, wobei der Abgaskrümmer Abgaskanäle und einen die Abgaskanäle zusammenführenden Sammelkanal aufweist. Der Abgaskrümmer ist stromab des Auslasssystems angeordnet, wobei je ein Abgaskanal einem Auslasskanal zugeordnet ist. Die Abgasleitung ist an einer Öffnung des Sammelkanals mit dem Abgaskrümmer verbunden, wobei die Öffnung stromab der Abgaskanäle positioniert ist. An einem von der Brennkraftmaschine abgewandten Ende der Abgasleitung ist zur Abgasnachbehandlung ein Abgasnachbehandlungssystem angeordnet, wobei das Abgasnachbehandlungssystem in Form eines Rußfilters und/oder Katalysators ausgebildet ist.

Die Brennkraftmaschine weist ergänzend ein Abgasrückführsystem auf, wobei zwischen dem Abgaskrümmer und dem Sammelbehälter eine Verbindungsleitung in Form einer Abgasrückführleitung angeordnet ist. In der Abgasrückführleitung ist zur Kühlung von rückgeführtem Abgas ein Abgasrückführkühler angeordnet. Eine Einstellung einer rückgeführten Abgasmenge erfolgt mit Hilfe eines Abgasrückführventils.

Zur Regelung und Steuerung vieler Funktionen ist der Brennkraftmaschine ein Regelungs- und Steuerungssystem zugeordnet. Über das Regelungs- und Steuerungssystem sind insbesondere die Kraftstoffzufuhr und das Abgasrückführventil regelbar.

Der Brennkraftmaschine ist ein Abgasturbolader 1 zugeordnet, welcher ein Gehäuse 2 aufweist, das einen durchströmbaren Luftführungsabschnitt, einen durchströmbaren Abgasführungsabschnitt 3 und einen Lagerabschnitt umfasst, wobei der Luftführungsabschnitt im Frischluftstrang und der Abgasführungsabschnitt 3 im Abgasstrang angeordnet sind.

Der Abgasturbolader 1 weist ein Laufzeug 4 auf, welches ein Verdichterrad zum Ansaugen und Verdichten von Verbrennungsluft, ein Turbinenrad 5 zur Expansion von Abgas sowie eine das Verdichterrad mit dem Turbinenrad 5 drehfest verbindende Welle 6 mit einer Drehachse 7 umfasst. Die Welle 6 ist im Lagerabschnitt des Abgasturboladers 1 drehbar gelagert, welcher zwischen dem Luftführungsabschnitt und dem Abgasführungsabschnitt 3 positioniert ist.

Im Luftführungsabschnitt ist das Verdichterrad in einer ersten Radkammer drehbar positioniert. Stromauf der ersten Radkammer ist ein Einströmkanal im Luftführungsabschnitt angeordnet, wobei der Einströmkanal und das Verdichterrad bevorzugt koaxial angeordnet sind. Der Einströmkanal dient zur Konditionierung der vom Verdichterrad angesaugten Verbrennungsluft.

Stromab der ersten Radkammer ist im Luftführungsabschnitt ein Abströmkanal in Form eines Diffusors ausgebildet, welcher zur Konditionierung der vom Verdichterrad angesaugten und verdichteten Verbrennungsluft ausgelegt ist. Dem Abströmkanal ist an seinem von der ersten Radkammer abgewandten Ende ein zum Luftführungsabschnitt gehöriger erster Spiralkanal angeschlossen, welcher zur Bereitstellung einer rotationssymmetrischen Strömung dient. Des Weiteren ist der erste Spiralkanal als Verbindungskanal zwischen dem Abströmkanal und einem im Luftführungsabschnitt ausgebildeten Austrittskanal ausgeführt.

Der Luftführungsabschnitt weist eine Vorrichtung zur Änderung der Anströmung des Verdichterrades auf. Aufgrund der Änderung der Anströmung ist eine Expansion der angesaugten Verbrennungsluft erreichbar, so dass ein Betrieb des Verdichterrades im Kaltluft-Turbinenbetrieb möglich ist.

Zur Einströmung des Abgases in den Abgasführungsabschnitt 3 ist ein Eintrittskanal 8 im Abgasführungsabschnitt 3 ausgebildet. Der Eintrittskanal 8 dient zur Konditionierung des Abgases, welches im Betrieb der Brennkraftmaschine das Turbinenrad 5 in eine rotierende Bewegung versetzt. Vorzugsweise ist der Eintrittskanal 8 senkrecht zur Drehachse 7 angeordnet.

Stromab des Eintrittskanals 8 ist im Abgasführungsabschnitt 3 ein zweiter Spiralkanal 9 angeordnet, welcher zur Bereitstellung einer rotationssymmetrischen Strömung dient. Stromab des zweiten Spiralkanals 9 ist ein Zuströmkanal 10 im Abgasführungsabschnitt 3 positioniert, welcher im Allgemeinen zur Konditionierung der Strömung des Abgases ausgebildet ist. Des Weiteren ist der zweite Spiralkanal 9 als Verbindungskanal zwischen dem Eintrittskanal 8 und dem Zuströmkanal 10 ausgebildet. Stromab des Zuströmkanals 10 ist eine zweite Radkammer 11 im Abgasführungsabschnitt 3 angeordnet, wobei in der zweiten Radkammer 11 das Turbinenrad 5 positioniert ist. Der Zuströmkanal 10 weist an seinem der zweiten Radkammer 11 zugewandten Ende einen Mündungsquerschnitt 12 auf. Stromab der zweiten Radkammer 11 ist ein Austrittskanal 13 im Abgasführungsabschnitt 3 angeordnet.

Im Betrieb der Brennkraftmaschine wird das Turbinenrad 5 als Folge einer Beaufschlagung durch das Abgas der Brennkraftmaschine in eine Rotationsbewegung versetzt, wobei mit Hilfe der Welle 6 das Verdichterrad ebenfalls in Rotation versetzt wird, so dass es Verbrennungsluft ansaugt und verdichtet.

Damit sowohl bei niedrigen Lasten und niedrigen Drehzahlen der Brennkraftmaschine als auch bei hohen Lasten und hohen Drehzahlen der Brennkraftmaschine ein größtmöglicher Abgasturboladerwirkungsgrad erreichbar ist, ist das Abgas mit Hilfe einer verstellbar ausgebildeten Leitvorrichtung 14 konditionierbar, welche im Abgasführungsabschnitt 3 angeordnet ist.

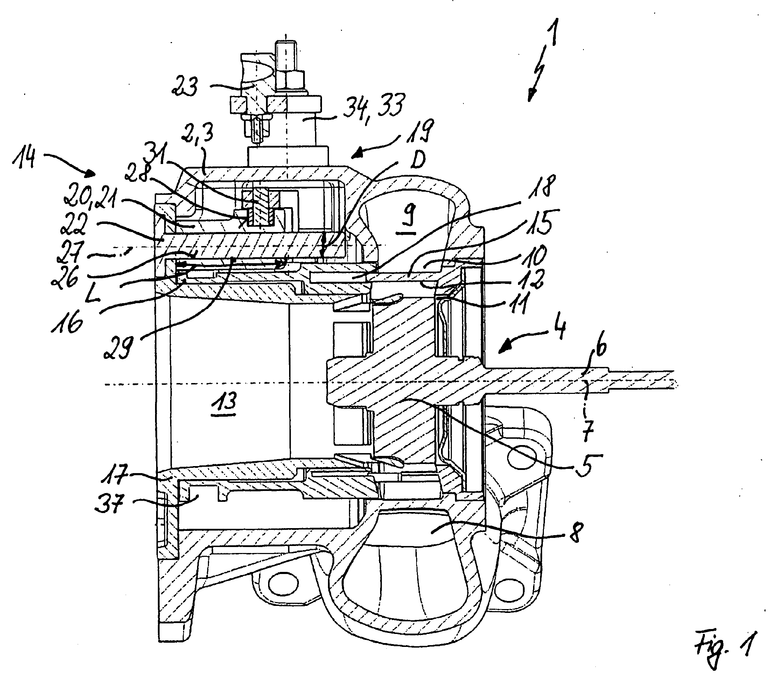

Wie in der Fig. 1 dargestellt ist, umfasst die Leitvorrichtung 14 einen durchströmbaren Leitgitterring 15, einen ringförmigen Axialschieber 16 und eine Konturhülse 17, welche zur Strömungskonditionierung des Abgases im Austrittskanal 13 dient. Der Leitgitterring 15, der Axialschieber 16 und die Konturhülse 17 sind koaxial mit der Welle 6 angeordnet. Die Konturhülse 17 ist unbewegbar im Abgasführungsabschnitt 3 positioniert.

Der Leitgitterring 15 ist das Turbinenrad 5 teilweise umschließend im Zuströmkanal 10 angeordnet, wobei der Leitgitterring 15 in den Mündungsquerschnitt 12 hineinragend ausgebildet ist. Der Axialschieber 16 weist eine dem Leitgitterring 15 zugewandt angeordnete erste Aussparung 18 auf, in welche der Leitgitterring 15 einführbar ausgestaltet ist. Mit Hilfe des Axialschiebers 16 ist der Mündungsquerschnitt 12 in seiner Größe einstellbar. Bevorzugt ist der Mündungsquerschnitt 12 bei niedrigen Lasten und/oder Drehzahlen der Brennkraftmaschine klein und bei hohen Lasten und/oder Drehzahlen der Brennkraftmaschine groß ausgebildet.

Der Leitvorrichtung 14 ist eine Verstellvorrichtung 19 zugeordnet. Die Verstellvorrichtung 19 umfasst eine Verstellgabel 20 mit einem Führungsabschnitt 21, ein Führungselement 22 und einen Verstellhebel 23. Eine auf den Verstellhebel 23 wirkende, die Verschiebung einleitende Kraft ist elektrisch und/oder mechanisch und/oder pneumatisch und/oder hydraulisch initiierbar.

Die Verstellgabel 20 ist u-förmig ausgebildet. Ein erster bogenförmig ausgestalteter Gabelarm 24 und ein zweiter bogenförmig ausgestalteter Gabelarm 25 sind an ihren dem Führungsabschnitt 21 zugewandten Enden unbewegbar mit dem Führungsabschnitt 21 verbunden. Der erster Gabelarm 24 und der zweite Gabelarm 25 sind sich gegenüberliegend symmetrisch, konvex zu dem zwischen dem ersten Gabelarm 24 und dem zweiten Gabelarm 25 angeordneten Führungsabschnitt 21 positioniert.

Der Führungsabschnitt 21 weist eine den Führungsabschnitt 21 vollständig durchdringende Öffnung 26 mit einer Führungsachse 27 auf, welche parallel zur Drehachse 7 angeordnet ist. Quer zur Führungsachse 27 weist der Führungsabschnitt 21 an seiner vom Axialschieber 16 abgewandten Oberfläche eine nutförmige zweite Aussparung 28 auf. Zur gesicherten Führung der Verstellgabel 20 weist das Führungselement 22 einen komplementär zur Öffnung 26 ausgestalteten Querschnitt auf. Bevorzugt ist ein symmetrischer Querschnitt zu wählen.

Das Führungselement 22 ist vorzugsweise zylindrisch ausgestaltet und weist einen effektiven Durchmesser D auf. Zur Gewährleistung der sicheren Führung ist das Führungselement 22 an seiner vom Turbinenrad 5 abgewandten Seite mit der Konturhülse 17 unbewegbar verbunden. Das Führungselement 22 ist an seiner dem Turbinenrad 5 zugewandten Seite im Abgasführungsabschnitt 3 abgestützt, wodurch ein Verzug des Führungselementes 22 aufgrund von Temperaturschwankungen vermeidbar ist.

Die Verstellgabel 20 ist auf dem Führungselement 22 gelagert angeordnet, wobei das Führungselement 22 in der bevorzugt zylindrisch ausgestalteten Öffnung 26 positioniert ist. Aufgrund der Lagerung ist ein Kontakt 29 mit der Länge L zwischen dem Führungselement 22 und der Verstellgabel 20 ausgebildet. Zur Vermeidung einer Kippbewegung der Verstellgabel 20 ist der effektiven Durchmesser D des Führungselements 22 dabei bevorzugt so zu wählen, dass die Länge L größer ist als der effektiven Durchmesser D, insbesondere ist ein zwischen der Länge L und dem effektiven Durchmesser D gebildetes Verhältnis L/D größer als 2 zu wählen.

Der Verstellhebel 23 weist einen ersten Hebelarm 30 mit einem zapfenförmig ausgebildeten Hebelende 31 und einen zweiten Hebelarm 32 auf. Der erste Hebelarm 30 und der zweite Hebelarm 32 sind einander gegenüberliegend mit Hilfe einer Verbindungsstange 33 fest verbunden, wobei das erste Hebelende 31 der zweiten Aussparung 28 zugewandt angeordnet ist. Der Verstellhebel 23 ist zur Aufnahme von Verstellkräften mit Hilfe der in einer Buchse 34 aufgenommenen Verbindungsstange 33 im Abgasführungsabschnitt 3 drehbar gelagert.

Das Hebelende 31 ist in die zweite Aussparung 28 eingreifend ausgebildet, wobei eine Zwangsführung des Hebelendes 31 in der zweiten Aussparung 28 ausgebildet ist. Vorzugsweise ist das Hebelende 31 in Form einer Gleitrolle ausgebildet, wodurch Verschleiß und Klemmen im Betrieb reduzierbar sind.

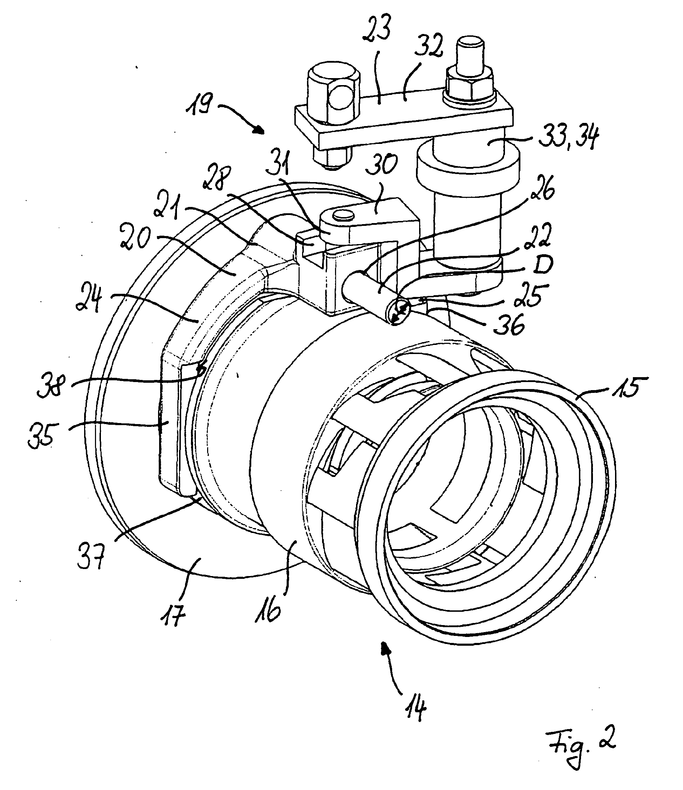

Wie in Fig. 2 dargestellt ist, ist die Verstellgabel 20 den Axialschieber 16 umgreifend angeordnet, wobei ein vom Führungsabschnitt 21 abgewandt angeordneter erster Endabschnitt 35 des ersten Gabelarmes 24 und ein dem Führungsabschnitt 21 abgewandt angeordneter zweiter Endabschnitt 36 des zweiten Gabelarmes 25 in eine den Axialschieber 16 umschließende nutförmige dritte Aussparung 37 eingreifend ausgebildet sind. Zwischen der dritten Aussparung 37 und einer der dritten Aussparung 37 zugewandt angeordneten ersten Kontaktfläche 38 des ersten Endabschnittes 35 ist ein erster Körperkontakt ausgebildet. Um einer Kippbewegung des Axialschiebers 16 entgegenzuwirken, ist ein zweiter Körperkontakt zwischen der dritten Aussparung 37 und einer der dritten Aussparung 37 zugewandt angeordneten zweiten Kontaktfläche 39 des zweiten Endabschnittes 36 ausgebildet, wobei eine zur Führungsachse 27 symmetrische Ausbildung des ersten Körperkontaktes und des zweiten Körperkontaktes zu beachten ist.

Vorteilhafterweise ist die dritte Aussparung 37 komplementär zum ersten Endabschnitt 35 und zum zweiten Endabschnitt 36 ausgebildet, wobei zur Fixierung des Axialschiebers 16 in der Verstellgabel 20 Festkörperkontakt aufgrund von Haftreibung zwischen der dritten Aussparung 37 und dem ersten Endabschnitt 35 sowie dem zweiten Endabschnitt 36 zu beachten ist.

In einer weiteren Ausführungsform weisen der erste Gabelarm 24 und der zweite Gabelarm 25 je eine dem Axialschieber 16 zugewandt angeordnete nutförmige Aussparung auf, in die ein ringförmiger oder teilweise ringförmiger, mit dem Axialschieber 16 fest verbundener, komplementär zum Querschnitt der nutförmigen Aussparung gestalteter Ring aufnehmbar vorgesehen ist.

In einer weiteren, alternativen Ausführungsform ist die Verstellgabel 20 mit dem Axialschieber 16 einteilig ausgestaltet, wobei die Verstellgabel 20 und der Axialschieber 16 am ersten Körperkontakt und am zweiten Körperkontakt jeweils eine feste Verbindung aufweisen.

Zur Positionierung des Axialschiebers 16 wird mit Hilfe des Aktuators eine auf den zweiten Hebelarm 32 wirkende Verstellkraft erzeugt. Da der Verstellhebel 23 drehbar gelagert ist, führt der erste Hebelarm 30 aufgrund seiner festen Verbindung mit dem zweiten Hebelarm 32 eine rotatorische Bewegung aus. Diese rotatorische Bewegung wird mit Hilfe der Zwangsführung des Hebelendes 31 in eine translatorische Bewegung der Verstellgabel 20 umgewandelt. Die Verstellgabel 20 wird entlang der Führungsachse 27 auf dem Führungselement 22 in Richtung der Drehachse 7 axial verschoben. Dabei führt der Axialschieber 16 aufgrund des ersten Körperkontaktes und des zweiten Körperkontaktes mit der Verstellgabel 20 eine axiale Bewegung aus.

## Patentansprüche

1. Abgasturbolader für eine Brennkraftmaschine, mit einem Gehäuse (2) und einem Laufzeug (4), wobei das Gehäuse (2) einen durchströmbaren Abgasführungsabschnitt (3) und das Laufzeug (4) ein Turbinenrad (5) und eine mit dem Turbinenrad (5) drehfest verbundene Welle (6) mit einer Drehachse (7) aufweist, wobei das Turbinenrad (5) im Abgasführungsabschnitt (3) drehbar gelagert ist, und das Turbinenrad (5) von Abgas beaufschlagbar ausgestaltet ist, und im Abgasführungsabschnitt (3) eine Leitvorrichtung (14) zur Änderung der Beaufschlagung des Turbinenrades (5) durch das Abgas angeordnet ist, wobei die Leitvorrichtung (14) einen in Richtung der Drehachse (7) verstellbaren Axialschieber (16) aufweist, und wobei der Leitvorrichtung (14) eine Verstellvorrichtung (19) mit einer Verstellgabel (20) zugeordnet ist,
**dadurch gekennzeichnet, dass**
ein Führungselement (22) vorgesehen ist, welches sich in Richtung der Drehachse (7) erstreckt, wobei die Verstellgabel (20) entlang des Führungselementes (22) translatorisch bewegbar ausgestaltet ist, wobei das Führungselement (22) in einer Öffnung (26) der Verstellgabel (20) positioniert ist, wobei die Öffnung (26) in einem Führungsabschnitt (21) der Verstellgabel (20) angeordnet ist.

2. Abgasturbolader nach Anspruch 1,
**dadurch gekennzeichnet, dass**
zwischen der Verstellgabel (20) und dem Führungselement (22) ein Kontakt mit einer Länge (L) ausgebildet ist,
wobei das Führungselement (22) einen effektiven Durchmesser (D) aufweist, und ein zwischen der Länge (L) und dem effektiven Durchmesser (D) gebildetes Verhältnis (L/D) größer als 2 ist.

3. Abgasturbolader nach einem der Ansprüche 1 bis 2,
**dadurch gekennzeichnet, dass**
das Führungselement (22) an seiner vom Turbinenrad (5) abgewandten Seite in einer Konturhülse (17) und an seiner dem Turbinenrad (5) zugewandt angeordneten Seite im Abgasführungsabschnitt (3) abgestützt ist.

4. Abgasturbolader nach einem der Ansprüche 1 bis 3,
**dadurch gekennzeichnet, dass**
das Führungselement (22) und die Öffnung (26) zylinderförmig ausgebildet sind.

5. Abgasturbolader nach einem der Ansprüche 1 bis 4,
**dadurch gekennzeichnet, dass**
die Verstellgabel (20) und der Axialschieber (16) einen ersten Körperkontakt und einen zweiten Körperkontakt aufweisen, wobei der erste Körperkontakt und der zweite Körperkontakt symmetrisch zu einer Führungsachse (27) des Führungselementes (22) angeordnet sind.

6. Abgasturbolader nach einem der Ansprüche 1 bis 5,
**dadurch gekennzeichnet, dass**
zur Wandlung einer die axiale Verschiebung initiierende Bewegung in eine translatorische Bewegung der Führungsabschnitt (21) eine zweite Aussparung (28) aufweist, in welche ein Hebelende (31) eines Verstellhebels (23) eingreifend angeordnet ist, mit Hilfe dessen die axiale Verschiebung einleitbar ist.

7. Abgasturbolader nach Anspruch 6,
**dadurch gekennzeichnet, dass**
das Hebelende (31) in Form einer Gleitrolle ausgebildet ist.

## Claims

1. Turbocharger for an internal combustion engine, comprising a housing (2) and a wheel assembly (4), wherein the housing (2) comprises a flow-trough exhaust gas guide section (3) and the wheel assembly (4) comprises a turbine wheel (5) and a shaft (6) non-rotationally joined to the turbine wheel (5) and having an axis of rotation (7), wherein the turbine wheel (5) is rotatably mounted in the exhaust gas guide section (3) and the turbine wheel (5) is designed for pressurisation by exhaust gas and wherein a guiding device (14) is provided in the exhaust gas guide section (3) to change the pressurisation of the turbine wheel (5) by the exhaust gas, wherein the guiding device (14) comprises an axial slide (16) adjustable in the direction of the axis of rotation (7), and wherein an adjusting device (19) with an adjusting fork (20) is assigned to the guiding device (14),
**characterised in that**
a guiding element (22) extending in the direction of the axis of rotation (7) is provided, wherein the adjusting fork (20) is designed for translatory movement along the guiding element (22), wherein the guiding element (22) is located in an opening (26) of the adjusting fork (20), the opening (26) being provided in a guide section (21) of the adjusting fork (20).

2. Turbocharged according to claim 1,
**characterised in that**
a contact with a length (L) is formed between the adjusting fork (20) and the guiding element (22), the guiding element (22) having an effective diameter (D) and the ratio between the length (L) and the effective diameter (D) (L/D) being greater than 2.

3. Turbocharged according to claim 1 or 2,
**characterised in that**
the guiding element (22) is supported in a contoured sleeve (17) on the side remote from the turbine wheel (5) and in the exhaust gas guide section (3) on the side facing the turbine wheel (5).

4. Turbocharged according to any of claims 1 to 3,
**characterised in that**
the guiding element (22) and the opening (26) are cylindrical.

5. Turbocharged according to any of claims 1 to 4,
**characterised in that**
the adjusting fork (20) and the axial slide (16) have a first body contact and a second body contact, the first and second body contacts being arranged symmetrical with respect to a guide axis (27) of the guiding element (22).

6. Turbocharged according to any of claims 1 to 5,
**characterised in that**
in order to convert a movement initiating the axial displacement into a translatory movement, the guide section (21) is provided with a second recess (28) wherein lever end (31) of an adjusting lever (23) by means of which the axial displacement can be initiated is arranged for engagement.

7. Turbocharged according to claim 6,
**characterised in that**
the lever end (31) is designed in the form of a sliding roller.

## Revendications

1. Turbocompresseur pour un moteur à combustion interne, comportant un boîtier (2) et un bloc rotor (4), le boîtier (2) présentant une section de guidage de gaz d'échappement (3) pouvant être parcourue par un fluide et le bloc rotor (4) présentant un arbre (6) connecté de façon bloquée en rotation à la roue de turbine (5), pourvu d'un axe de rotation (7), la roue de turbine (5) étant logée dans la section de guidage de gaz d'échappement (3) de manière à pouvoir tourner et est conçu pour être actionnée par les gaz d'échappement, et un dispositif de guidage (14) destiné à modifier l'actionnement de la roue de turbine (5) par le gaz d'échappement étant disposé dans la section de guidage de gaz d'échappement (3), le dispositif de guidage (14) comporte un coulisseau axial (16) réglable dans la direction de l'axe de rotation (7), et le dispositif de guidage (14) est associé à un dispositif de réglage (19) doté d'une fourche de réglage (20), **caractérisé en ce qu'**est prévu un élément de guidage (22) qui s'étend dans la direction de l'axe de rotation (7), la fourche de guidage (20) se déplace par translation le long de l'élément de guidage (22), l'élément de guidage (22) est positionné dans une ouverture (26) de la fourche de guidage (20), ladite ouverture (26) étant disposée dans une section de guidage (21) de la fourche de guidage (20).

2. Turbocompresseur selon la revendication 1, **caractérisé en ce qu'**un contact d'une longueur (L) est formé entre la fourche de guidage (20) et l'élément de guidage (22), ledit élément de guidage (22) présentant un diamètre effectif (D), et **en ce qu'**un rapport (L/D) formé entre la longueur (L) et le diamètre effectif (D) est supérieur à 2.

3. Turbocompresseur selon l'une quelconque des revendications 1 à 2, **caractérisé en ce que** l'élément de guidage (22) est en appui sur sa face opposée à la roue de turbine (5) dans un manchon de contour (17) et sur sa face disposée orientée vers la roue de turbine (5) dans la section de guidage de gaz d'échappement (3).

4. Turbocompresseur selon l'une quelconque des revendications 1 à 3, **caractérisé** sen ce que l'élément de guidage (22) et l'ouverture (26) sont cylindriques.

5. Turbocompresseur selon l'une quelconque des revendications 1 à 4, **caractérisé en ce que** la fourche de guidage (20) et le coulisseau axial (16) présentent un premier contact de corps et un second contact de corps, ledit premier contact de corps et ledit second contact de corps étant disposés symétriquement par rapport à l'axe de guidage (27) de l'élément de guidage (22).

6. Turbocompresseur selon l'une quelconque des revendications 1 à 5, **caractérisé en ce que** la section de guidage (21) présente un second évidemment (28) permettant de transformer un mouvement initiant le déplacement axial en un mouvement de translation de la section de guidage (21), dans lequel une extrémité (31) d'un levier de réglage (23) qui permet de déclencher le déplacement axial, est disposée de façon à pouvoir s'encastrer.

7. Turbocompresseur selon la revendication 6, **caractérisé en ce que** l'extrémité du levier (31) est en forme de rouleau coulissant.
